# EUROPEAN PATENT SPECIFICATION

(11) **EP 4 595 048 B1**
(45) Date of publication and mention of the grant of the patent: **15.04.2026**
(21) Application number: 23810452.5
(22) Date of filing: 26.09.2023
(51) Int. Cl.: G10K 11/172, F16F 15/02

(54) **VIBROACOUSTIC STRUCTURE SYSTEM**
VIBROAKUSTISCHES STRUKTURSYSTEM
SYSTÈME DE STRUCTURE VIBRO-ACOUSTIQUE

(30) Priority: 30.09.2022 TR 202215020
(43) Date of publication of application: 06.08.2025
(73) Proprietor: Tusas- Turk Havacilik Ve Uzay Sanayii Anonim Sirketi, 06980 Ankara (TR)
(72) Inventor: BAL, Mustafa, 06980 Ankara (TR); TASTAN, Huseyin Cemal, 06980 Ankara (TR)
(74) Representative: Berkkam, Ayfer
(86) International application number: PCT/TR2023/051025
(87) International publication number: WO 2024/072354

(56) References cited:
- CN-A- 110 427 731
- KR-A- 20220 130 874
- US-A1- 2006 202 492
- US-B1- 7 582 349
- US-B1- 8 408 358
- BOUCHER M-A. ET AL: "Damping capacity in shape memory alloy honeycomb structures", PROCEEDINGS OF SPIE, vol. 7643, 25 March 2010 (2010-03-25), pages 764332, XP093119561, ISSN: 0277-786X, Retrieved from the Internet <URL:https://dx.doi.org/10.1117/12.847604> [retrieved on 20240115], DOI: 10.1117/12.847604

## Description

This invention relates to a vibroacoustic structure system that absorbs acoustic vibration occurring in an air vehicle.

Structural parts of an air vehicle may be exposed to acoustic vibrations due to environmental factors or operation of the motor in the air vehicle. Various vibroacoustic materials are used to reduce and dampen the effects of such vibrations. These materials slow down the transmission of structural vibration. Vibroacoustic structure systems may have a complex structure. These structures can be produced by an additive manufacturing method, thereby enabling production of systems with complex structures. Tensile and bending strengths of these materials should preferably be high. In this way, both light and strong vibroacoustic structures can be obtained.

US9514734B1, which is included in the known-state of the art, discloses a depth-changeable acoustic insulation structure used in an air vehicle. The depth is changed by temperature, so that acoustic waves at different frequencies are dampened.

US20140147656A1, which is included in the known-state of the art, discloses a wave absorber usable in an air vehicle with the capability of dampening frequencies in a variable range through holes of different sizes, and regaining its original shape when deformed.

CN 110427731A and US 8,408,358 B1 disclose honeycomb panels with tunable damping frequencies, in which a shape memory alloy is used to change the resonant volume of the honeycomb cells.

Thanks to a vibroacoustic structure system according to the present invention, multiple types of vibrations at different frequencies applied to air vehicle are dampened with a single structure.

Another object of the present invention is to provide acoustic vibration damping for an air vehicle by using a lighter and more durable vibroacoustic material.

Another object of the present invention is to provide acoustic vibration damping in a more efficient, practical and cost-effective way.

To achieve the object of the invention, a vibroacoustic structure system according to claim 1 is realized.

In an embodiment of the invention, the vibroacoustic structure system comprises the plate located on the body and consisting of a plurality of regularly structured unit cells and irregularly structured intermediate cells connected to the unit cells, thereby dampening acoustic vibrations at different types of frequencies that reach the body from the vibration source simultaneously.

In an embodiment of the invention, the vibroacoustic structure system comprises the plate in which only the walls of the intermediate cells in contact with each other are made of a shape memory alloy.

In an embodiment of the invention, the vibroacoustic structure system comprises an intermediate wall produced by an additive manufacturing device by mixing the materials of both the unit cell and the intermediate cell in powder form, thereby preventing the deformed intermediate cells from separating from the fixed unit cells, wherein a wall where the intermediate cell wall is in contact with the unit cell wall is provided integrally.

In an embodiment of the invention, the vibroacoustic structure system comprises a sensor which is located on the body and detects a vibration emitted by the vibration source and reaching the body. It comprises a control unit on the body, which is connected to the sensor and actuator and sends information to the actuator upon receiving information from the sensor. It comprises the plate, which is triggered by the actuator to change shape upon a command by the control unit when the vibration is detected by the sensor, in order to dampen the vibration at a frequency predetermined by the manufacturer.

In an embodiment of the invention, the vibroacoustic structure system comprises the plate in which non-moving unit cells are arranged in rows in the same alignment, and intermediate cells are arranged in the same alignment and conjugate along the row.

In an embodiment of the invention, the vibroacoustic structure system comprises the plate in which a unit cell size is greater than an intermediate cell size, thus preventing separations when the intermediate cells are deformed.

In an embodiment of the invention, the vibroacoustic structure system comprises the plate in which the intermediate cells are made of a more flexible material than the material of the unit cells, so that movement of the intermediate cells during deformation prevents separations.

In an embodiment of the invention, the vibroacoustic structure system comprises the control unit which detects the intermediate cell form after a user inputs the form parameter information of the unit cell and performs mathematical operations according to this parameter, thereby triggering the actuator so that the intermediate cells take the detected form.

In an embodiment of the invention, the vibroacoustic structure system comprises the plate that simultaneously dampens vibrations at various frequencies, thanks to the production of intermediate cell walls from different shape memory alloys.

In an embodiment of the invention, the vibroacoustic structure system comprises the plate containing unit cells and intermediate cells in different configurations that are placed consecutively so as to be deformed to adapt vibrations at more than two frequencies, thus damping two different frequencies simultaneously.

In an embodiment of the invention, the vibroacoustic structure system comprises the plate, which is a structural part of an air vehicle.

In an embodiment of the invention, the vibroacoustic structure system comprises the intermediate cell comprising walls with an angular or curved geometry.

The vibroacoustic structure system realized to achieve the object of the invention is illustrated in the attached drawings, in which:
Figure 1 is a schematic illustration of the vibroacoustic structure system.
Figure 2 is a top view of the plate in the first position (I).
Figure 3 is a top view of the plate in the second position (II).

All the parts illustrated in figures are individually assigned a reference numeral and the corresponding terms of these numbers are listed below:
1. Vibroacoustic Structure System
2. Body
3. Unit Cell
4. Plate
5. Intermediate Cell
6. Actuator
7. Sensor
8. Control Unit
V. Vibration Source
A. Intermediate Wall
I. First Position
II. Second Position

The vibroacoustic structure system (1) comprises a body (2) in an air vehicle, which is subjected to vibration; a plurality of unit cells (3) located on the body (2); a plate (4) located on the body (2), which has a plurality of unit cells (3); at least one vibration source (V) which creates vibration on the body (2); unit cells (3) that almost completely absorb the vibration created on the body (2); unit cells (3) located on the plate (4) with an almost completely fixed form.

The vibroacoustic structure system (1) according to the invention comprises a plurality of intermediate cells (5) located on the plate (4) and between the unit cells (3),containing shape memory alloy material; an actuator (6) located on the body (2), which energizes the intermediate cells (5), thereby enabling the intermediate cells (5) to change shape and/or form; the plate (4) having a first position (I) in which at least two unit cells (3) move away from each other due to the intermediate cells (5) changing shape and/or form when triggered by the actuator (6), a second position (II) in which at least two unit cells (3) approach each other due to the intermediate cells (5) changing shape and/or form when triggered by the actuator (6), thereby allowing that vibrations at multiple types of frequencies reaching thereon simultaneously are absorbed.

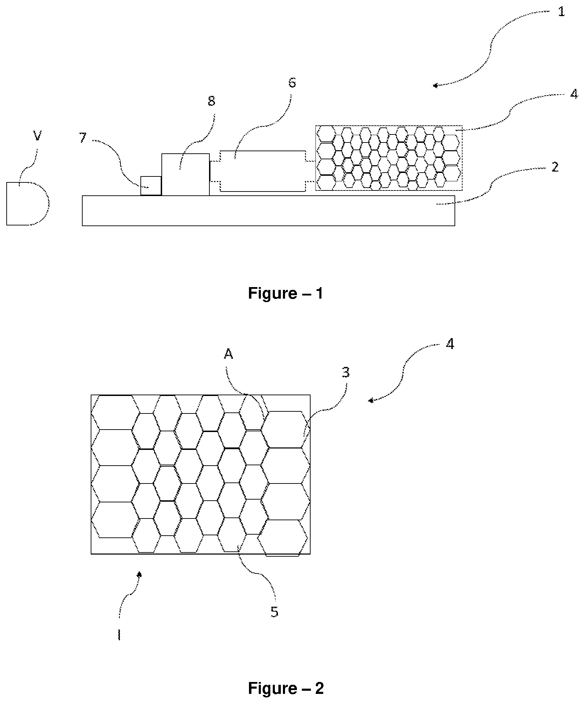

The body (2) is subjected to vibration caused by the vibration source (V), such as engine, wing or tail resonance. A plate (4) consisting of unit cells (3) on the body (2) dampens such vibrations reaching the body (2). Unit cells (3) are located on the plate (4) in a fixed position (Figure 1).

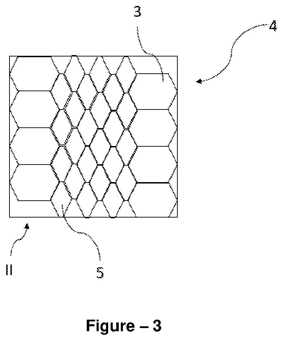

Intermediate cells (5) are located between the unit cells (3). Intermediate cells (5) are located on the plate (4), contain a shape memory alloy and change shape when actuated by the actuator (6) with a trigger such as temperature, electric current or magnetic field. As the intermediate cells (5) are triggered and expanded by the actuator (6), a first position (I) is obtained, in which the unit cells (3) are located far from each other. As the intermediate cells (5) are triggered and narrowed by the actuator (6), a second position (II) is obtained, in which the unit cells (3) are located closer to each other. In this way, the plate (4) can effectively and individually dampen the vibration reaching the body (2) at different frequencies (Figure 2, Figure 3).

In an embodiment of the invention, the vibroacoustic structure system (1) comprises the plate (4) located on the body (2), consisting of a plurality of crystalline unit cells (3) and amorphous intermediate cells (5) connected to the unit cells (3), and thus capable of absorbing simultaneous incoming vibrations at different frequencies. Intermediate cells (5) may consist of amorphous structure. The amorphous intermediate cell (5) walls can be deformed effectively. Said intermediate cells (5) and the unit cells (3) having a crystalline structure can be located together in the plate (4). Thus, different acoustic vibrations can be dampened by the plate (4) simultaneously in an effective manner.

In an embodiment of the invention, the vibroacoustic structure system (1) comprises the plate (4) in which only the walls of the intermediate cells (5) that contact with each other are made of a shape memory alloy. Due to the fact that only the walls where the intermediate cells (5) are in contact with each other are made of a shape memory alloy, the intermediate cells (5) triggered by the actuator (6) can be deformed to dampen vibrations at a plurality of frequencies.

In an embodiment of the invention, the vibroacoustic structure system (1) comprises an intermediate wall (A) located in a monolithic manner at the junction of the intermediate cell (5) wall and the unit cell (3) wall, wherein the intermediate wall (A) is produced by an additive manufacturing method by pulverizing and mixing the materials of both the unit cell (3) and the intermediate cell (5) that they are made of, thereby preventing the deformable intermediate cells (5) from separating from the fixed unit cells (3). The walls in contact between the intermediate wall (A), intermediate cell (5) and unit cell (3) are manufactured by an additive manufacturing method with a material that is a mixture of both the material of intermediate cells (5) and the material of the unit cell (3) that they are made of. In this way, the connection between the intermediate cells (5) is prevented from breaking during movement (Figure 2).

In an embodiment of the invention, the vibroacoustic structure system (1) comprises a sensor (7) located on the body (2) for detecting a vibration to which the body (2) is subjected; a control unit (8) located on the body (2), connected to the sensor (7) and actuator (6), and triggering the actuator (6) with respect to the data received from the sensor (7); the plate (4) triggered by the actuator (6) so as to be deformed upon a command by the control unit (8) when the sensor (7) detects the vibration, in order to absorb the vibration at a frequency predetermined by a user. The sensor (7) located on the body (2) detects the vibration reaching the body (2) from the vibration source (V), and transmits the vibration data to the control unit (8). The control unit (8) processes this data and triggers the plate (4) by alerting the actuator (6) to trigger. Therefore, a structure is obtained, which is capable of dampening the changing frequency when the acoustic vibration frequency changes (Figure 1).

In an embodiment of the invention, the vibroacoustic structure system (1) comprises the plate (4) on which fixed unit cells (3) are arranged in a row, side by side in the same alignment, and intermediate cells (5) are arranged conjugate and sequentially in the same alignment. Thus, the plate (4) containing cells in a regular structure is obtained.

In an embodiment of the invention, the vibroacoustic structure system (1) comprises the plate (4) in which a size of the unit cell (3) is larger than a size of the intermediate cell (5), thus preventing separations during deformation of the intermediate cell (5). Since the unit cells (3) are larger in size than the intermediate cells (3), their connection with the moving intermediate cells (5) during deformation is ensured, so that they can easily adapt to this deformation.

In an embodiment of the invention, the vibroacoustic structure system (1) comprises the plate (4) in which the intermediate cells (5) are made of more flexible material than the unit cells (3), thus preventing separations during the movement of the intermediate cell (5). Thanks to the intermediate cells (5) made of a more flexible material than the unit cells (3), the connections between the deformed intermediate cells (5) are prevented from breaking during deformation.

In an embodiment of the invention, the vibroacoustic structure system (1) comprises the control unit (8) to which the user inputs form parameter data of the unit cell (3), such that the control unit (8) performs mathematical operations according to this parameter and determine the form of the intermediate cell (5), thereby triggering the actuator (6) in order for the intermediate cells (5) to take the desired form. The user inputs the form data of the unit cell (3) to the control unit (8). The control unit (8) performs operations according to this information, determines the form of the intermediate cell (5) and triggers the actuator (6) so that the intermediate cell (5) takes this determined form. In this way, form of the intermediate cell (5) is determined and vibrations of varying frequencies are dampened.

In an embodiment of the invention, the vibroacoustic structure system (1) comprises the plate (4) that simultaneously absorbs vibrations at different frequencies by means of the walls of the intermediate cells (5) made of different shape memory alloy material. Since it contains different shape memory alloys, the intermediate cells (5) can take on different shapes simultaneously when triggered by the actuator (6), specific to different frequencies.

In an embodiment of the invention, the vibroacoustic structure system (1) comprises the plate (4) containing unit cells (3) and intermediate cells (5) in different configurations that are positioned sequentially so as to be deformed according to more than two frequencies, thus absorbing two different simultaneous frequencies. Thanks to the sequential placement of the plates (4) containing different intermediate cell (5) and unit cell (3) configurations, acoustic vibrations of different frequencies reaching simultaneously can be absorbed in a simultaneous manner.

In an embodiment of the invention, the vibroacoustic structure system (1) comprises the plate (4) forming a structural part of the air vehicle.

In an embodiment of the invention, the vibroacoustic structure system (1) comprises the intermediate cell (5) consisting of walls with angular or curved geometry. Thus, a lightweight plate (4) is obtained.

## Claims

1. A vibroacoustic structure system (1) comprising:
a body (2) in an air vehicle, which is subjected to vibration; a plurality of unit cells (3) located on the body (2); a plate (4) located on the body (2), which comprises said plurality of unit cells (3); at least one vibration source (V) which creates vibration on the body (2); said unit cells (3) configured to substantially absorb the vibration created on the body (2); said unit cells (3) located on the plate (4) with an almost completely fixed form; a plurality of intermediate cells (5) located on the plate (4) and between the unit cells (3), containing shape memory alloy material; an actuator (6) located on the body (2);
**characterised in that:**
the actuator energizes the intermediate cells (5), thereby enabling the intermediate cells (5) to change shape and/or form; the plate (4) having a first position (I) in which at least two unit cells (3) move away from each other due to the intermediate cells (5) changing shape and/or form when triggered by the actuator (6), a second position (II) in which at least two unit cells (3) approach each other due to the intermediate cells (5) changing shape and/or form when triggered by the actuator (6), thereby allowing that vibrations at multiple types of frequencies reaching thereon simultaneously are absorbed.

2. A vibroacoustic structure system (1) according to claim 1, **characterized by** the plate (4) located on the body (2), consisting of a plurality of crystalline unit cells (3) and amorphous intermediate cells (5) connected to the unit cells (3), and thus capable of absorbing simultaneous incoming vibrations at different frequencies.

3. A vibroacoustic structure system (1) according to claim 1 or claim 2, **characterized by** the plate (4) in which only the walls of the intermediate cells (5) that contact with each other are made of a shape memory alloy.

4. A vibroacoustic structure system (1) according to any of the above claims, **characterized by** an intermediate wall (A) located in a monolithic manner at the junction of the intermediate cell (5) wall and the unit cell (3) wall, wherein the intermediate wall (A) is produced by an additive manufacturing method by pulverizing and mixing the materials of both the unit cell (3) and the intermediate cell (5) that they are made of, thereby preventing the deformable intermediate cells (5) from separating from the fixed unit cells (3).

5. A vibroacoustic structure system (1) according to any of the above claims, **characterized by** a sensor (7) located on the body (2) for detecting a vibration to which the body (2) is subjected; a control unit (8) located on the body (2), connected to the sensor (7) and actuator (6), and triggering the actuator (6) with respect to the data received from the sensor (7); the plate (4) triggered by the actuator (6) so as to be deformed upon a command by the control unit (8) when the sensor (7) detects the vibration, in order to absorb the vibration at a frequency predetermined by a user.

6. A vibroacoustic structure system (1) according to any of the above claims, **characterized by** the plate (4) on which fixed unit cells (3) are arranged in a row, side by side in the same alignment, and intermediate cells (5) are arranged conjugate and sequentially in the same alignment.

7. A vibroacoustic structure system (1) according to any of the above claims, **characterized by** the plate (4) in which a size of the unit cell (3) is larger than a size of the intermediate cell (5), thus preventing separations during deformation of the intermediate cell (5).

8. A vibroacoustic structure system (1) according to any of the above claims, **characterized by** the plate (4) in which the intermediate cells (5) are made of more flexible material than the unit cells (3), thus preventing separations during the movement of the intermediate cell (5).

9. A vibroacoustic structure system (1) according to any of the claims 5 to 8, **characterized by** the control unit (8) to which the user inputs form parameter data of the unit cell (3), such that the control unit (8) performs mathematical operations according to this parameter and determine the form of the intermediate cell (5), thereby triggering the actuator (6) in order for the intermediate cells (5) to take the desired form.

10. A vibroacoustic structure system (1) according to any of the above claims, **characterized by** the plate (4) that simultaneously absorbs vibrations at different frequencies by means of the walls of the intermediate cells (5) made of different shape memory alloy material.

11. A vibroacoustic structure system (1) according to any of the above claims, **characterized by** the plate (4) containing unit cells (3) and intermediate cells (5) in different configurations that are positioned sequentially so as to be deformed according to more than two frequencies, thus absorbing two different simultaneous frequencies.

12. A vibroacoustic structure system (1) according to any of the above claims, **characterized by** the plate (4) forming a structural part of the air vehicle.

13. A vibroacoustic structure system (1) according to any of the above claims, **characterized by** the intermediate cell (5) consisting of walls with angular or curved geometry.

## Patentansprüche

1. Ein vibroakustisches Struktursystem (1), umfassend: einen Tragkörper (2) in einem Luftfahrzeug, der Vibrationen ausgesetzt ist; mehrere Einheitszellen (3), die auf dem Tragkörper (2) angeordnet sind; eine Platte (4), die auf dem Tragkörper (2) angeordnet ist und die genannten Einheitszellen (3) umfasst; mindestens eine Vibrationsquelle (V), die Vibrationen auf dem Tragkörper (2) ausübt; die Einheitszellen (3), die so konfiguriert sind, dass sie die auf dem Tragkörper (2) einwirkenden Vibrationen im Wesentlichen absorbieren; die Einheitszellen (3), die in einer im Wesentlichen festen Konfiguration auf der Platte (4) angeordnet sind; mehrere Zwischenzellen (5), die auf der Platte (4) und zwischen den Einheitszellen (3) angeordnet sind und Formgedächtnislegierung enthalten; einen Aktuator (6), der auf dem Tragkörper (2) angeordnet ist; **dadurch gekennzeichnet, dass** der Aktuator die Zwischenzellen (5) mit Energie versorgt und ihnen dadurch ermöglicht, ihre Form und/oder Gestalt zu ändern; die Platte (4) weist eine erste Position (I) auf, in der sich mindestens zwei Einheitszellen (3) aufgrund der Form- und/oder Gestaltänderung der Zwischenzellen (5) bei Auslösung durch den Aktuator (6) voneinander entfernen, sowie eine zweite Position (II), in der sich mindestens zwei Einheitszellen (3) aufgrund der Form- und/oder Gestaltänderung der Zwischenzellen (5) bei Auslösung durch den Aktuator (6) annähern, wodurch Schwingungen unterschiedlicher Frequenzen, die gleichzeitig auf die Platte treffen, absorbiert werden können.

2. Ein vibroakustisches Struktursystem (1) nach Anspruch 1, **dadurch gekennzeichnet, dass** die auf dem Tragkörper (2) angeordnete Platte (4) aus einer Vielzahl kristalliner Einheitszellen (3) und mit den Einheitszellen (3) verbundenen amorphen Zwischenzellen (5) besteht und somit in der Lage ist, gleichzeitig einfallende Schwingungen unterschiedlicher Frequenzen zu absorbieren.

3. Ein vibroakustisches Struktursystem (1) nach Anspruch 1 oder 2, **dadurch gekennzeichnet, dass** die Platte (4) so ausgebildet ist, dass nur die Wände der miteinander in Kontakt stehenden Zwischenzellen (5) aus einer Formgedächtnislegierung bestehen.

4. Ein vibroakustisches Struktursystem (1) nach einem der vorstehenden Ansprüche, **dadurch gekennzeichnet, dass** sich eine monolithisch angeordnete Zwischenwand (A) an der Verbindungsstelle der Zwischenzellenwand (5) und der Einheitszellenwand (3) befindet, wobei die Zwischenwand (A) durch ein additives Fertigungsverfahren hergestellt wird, indem die Materialien der Einheitszelle (3) und der Zwischenzelle (5), aus denen sie bestehen, pulverisiert und vermischt werden, wodurch ein Ablösen der verformbaren Zwischenzellen (5) von den festen Einheitszellen (3) verhindert wird.

5. Ein vibroakustisches Struktursystem (1) nach einem der vorstehenden Ansprüche, **dadurch gekennzeichnet, dass** ein am Tragkörper (2) angeordneter Sensor (7) zur Erfassung von Vibrationen, denen der Tragkörper (2) ausgesetzt ist, eine am Tragkörper (2) angeordnete Steuereinheit (8), die mit dem Sensor (7) und dem Aktuator (6) verbunden ist und den Aktuator (6) anhand der vom Sensor (7) empfangenen Daten ansteuert, die Platte (4), die durch den Aktuator (6) so angesteuert wird, dass sie sich auf Befehl der Steuereinheit (8) verformt, wenn der Sensor (7) die Vibration erfasst, vorgesehen sind, um die Vibration bei einer vom Benutzer vorgegebenen Frequenz zu absorbieren.

6. Ein vibroakustisches Struktursystem (1) nach einem der vorstehenden Ansprüche, **dadurch gekennzeichnet, dass** die Platte (4), auf der feste Einheitszellen (3) in einer Reihe nebeneinander in der gleichen Ausrichtung angeordnet sind und Zwischenzellen (5) alternierend und sequenziell in der gleichen Ausrichtung angeordnet sind.

7. Ein vibroakustisches Struktursystem (1) nach einem der vorstehenden Ansprüche, **dadurch gekennzeichnet**, (4) dass die Größe der Einheitszelle (3) größer ist als die Größe der Zwischenzelle (5), wodurch ein Auseinanderfallen während der Verformung der Zwischenzelle (5) verhindert wird.

8. Ein vibroakustisches Struktursystem (1) nach einem der vorstehenden Ansprüche, **dadurch gekennzeichnet, dass** die Platte (4), in der die Zwischenzellen (5) aus einem flexibleren Material bestehen als die Einheitszellen (3), wodurch ein Auseinanderfallen während der Bewegung der Zwischenzelle (5) verhindert wird.

9. Ein vibroakustisches Struktursystem (1) nach einem der Ansprüche 5 bis 8, **dadurch gekennzeichnet, dass** die Steuereinheit (8) vom Benutzer Formparameterdaten (3) empfängt, sodass die Steuereinheit (8) mathematische Operationen anhand dieser Parameter durchführt und die Form der Zwischenzelle (5) bestimmt, wodurch der Aktuator (6) angesteuert wird, damit die Zwischenzellen (5) die gewünschte Form annehmen.

10. Ein vibroakustisches Struktursystem (1) nach einem der vorstehenden Ansprüche, **dadurch gekennzeichnet, dass** die Platte (4), die gleichzeitig Schwingungen bei verschiedenen Frequenzen mittels der Wände der Zwischenzellen (5) absorbiert, die aus unterschiedlichen Formgedächtnislegierungen bestehen.

11. Ein vibroakustisches Struktursystem (1) nach einem der vorstehenden Ansprüche, **dadurch gekennzeichnet, dass** die Platte (4), die Einheitszellen (3) und Zwischenzellen (5) in verschiedenen Konfigurationen enthält, die nacheinander so angeordnet sind, dass sie sich entsprechend mehr als zwei Frequenzen verformen und dadurch mehr als zwei gleichzeitig auftretende unterschiedliche Frequenzen absorbieren.

12. Ein vibroakustisches Struktursystem (1) nach einem der vorstehenden Ansprüche, **dadurch gekennzeichnet, dass** die Platte (4) einen Strukturteil des Luftfahrzeugs bildet.

13. Ein vibroakustisches Struktursystem (1) nach einem der vorstehenden Ansprüche, **dadurch gekennzeichnet, dass** die Zwischenzelle (5) aus Wänden mit winkliger oder gekrümmter Geometrie besteht.

## Revendications

1. Système de structure vibroacoustique (1) comprenant :
un corps (2) dans un véhicule aérien, lequel est soumis à des vibrations ; une pluralité de cellules unitaires (3) disposées sur le corps (2) ; une plaque (4) disposée sur le corps (2), laquelle comprend ladite pluralité de cellules unitaires (3) ; au moins une source de vibration (V) créant des vibrations sur le corps (2) ; lesdites cellules unitaires (3) étant configurées pour absorber sensiblement les vibrations créées sur le corps (2) ; lesdites cellules unitaires (3) étant disposées sur la plaque (4) dans une configuration sensiblement fixe ; une pluralité de cellules intermédiaires (5) disposées sur la plaque (4) et entre les cellules unitaires (3), contenant un matériau en alliage à mémoire de forme ; un actionneur (6) disposé sur le corps (2) ; **caractérisé en ce que :**
l'actionneur alimente les cellules intermédiaires (5), permettant ainsi aux cellules intermédiaires (5) de changer de forme et/ou de configuration ; la plaque (4) présentant une première position (I) dans laquelle au moins deux cellules unitaires (3) s'éloignent l'une de l'autre en raison du changement de forme et/ou de configuration des cellules intermédiaires (5) lorsqu'elles sont activées par l'actionneur (6), une seconde position (II) dans laquelle au moins deux cellules unitaires (3) se rapprochent l'une de l'autre en raison du changement de forme et/ou de configuration des cellules intermédiaires (5) lorsqu'elles sont activées par l'actionneur (6), permettant ainsi l'absorption simultanée de vibrations à plusieurs fréquences.

2. Système de structure vibroacoustique (1) selon la revendication 1, **caractérisé en ce que** la plaque (4) disposée sur le corps (2) est constituée d'une pluralité de cellules unitaires cristallines (3) et de cellules intermédiaires amorphes (5) reliées aux cellules unitaires (3), et est ainsi apte à absorber des vibrations entrantes simultanées à différentes fréquences.

3. Système de structure vibroacoustique (1) selon la revendication 1 ou la revendication 2, **caractérisé en ce que** la plaque (4) est telle que seules les parois des cellules intermédiaires (5) qui sont en contact les unes avec les autres sont réalisées en alliage à mémoire de forme.

4. Système de structure vibroacoustique (1) selon l'une quelconque des revendications précédentes, **caractérisé en ce qu'**une paroi intermédiaire (A) est disposée de manière monolithique au niveau de la jonction entre la paroi de la cellule intermédiaire (5) et la paroi de la cellule unitaire (3), ladite paroi intermédiaire (A) étant produite par un procédé de fabrication additive par pulvérisation et mélange des matériaux constituant à la fois la cellule unitaire (3) et la cellule intermédiaire (5), empêchant ainsi les cellules intermédiaires déformables (5) de se séparer des cellules unitaires fixes (3).

5. Système de structure vibroacoustique (1) selon l'une quelconque des revendications précédentes, **caractérisé en ce qu'**un capteur (7) est disposé sur le corps (2) pour détecter une vibration à laquelle le corps (2) est soumis ; une unité de commande (8) est disposée sur le corps (2), reliée au capteur (7) et à l'actionneur (6), et commandant l'actionneur (6) en fonction des données reçues du capteur (7) ; la plaque (4) étant activée par l'actionneur (6) de manière à être déformée sur commande de l'unité de commande (8) lorsque le capteur (7) détecte la vibration, afin d'absorber la vibration à une fréquence prédéterminée par un utilisateur.

6. Système de structure vibroacoustique (1) selon l'une quelconque des revendications précédentes, **caractérisé en ce que** la plaque (4) comporte des cellules unitaires fixes (3) disposées en rangée, côte à côte selon le même alignement, et des cellules intermédiaires (5) disposées de manière alternée et séquentielle selon le même alignement.

7. Système de structure vibroacoustique (1) selon l'une quelconque des revendications précédentes, **caractérisé en ce que** la plaque (4) est telle qu'une dimension de la cellule unitaire (3) est supérieure à une dimension de la cellule intermédiaire (5), empêchant ainsi toute séparation lors de la déformation de la cellule intermédiaire (5).

8. Système de structure vibroacoustique (1) selon l'une quelconque des revendications précédentes, **caractérisé en ce que** la plaque (4) est telle que les cellules intermédiaires (5) sont réalisées en un matériau plus flexible que les cellules unitaires (3), empêchant ainsi toute séparation lors du mouvement de la cellule intermédiaire (5).

9. Système de structure vibroacoustique (1) selon l'une quelconque des revendications 5 à 8, **caractérisé en ce que** l'unité de commande (8) reçoit de l'utilisateur des données de paramètres de forme de la cellule unitaire (3), de sorte que l'unité de commande (8) effectue des opérations mathématiques selon ces paramètres et détermine la forme de la cellule intermédiaire (5), déclenchant ainsi l'actionneur (6) afin que les cellules intermédiaires (5) prennent la forme souhaitée.

10. Système de structure vibroacoustique (1) selon l'une quelconque des revendications précédentes, **caractérisé en ce que** la plaque (4) absorbe simultanément des vibrations à différentes fréquences au moyen des parois des cellules intermédiaires (5) réalisées en différents alliages à mémoire de forme.

11. Système de structure vibroacoustique (1) selon l'une quelconque des revendications précédentes, **caractérisé en ce que** la plaque (4) comprend des cellules unitaires (3) et des cellules intermédiaires (5) dans différentes configurations disposées séquentiellement de manière à être déformées selon plus de deux fréquences, absorbant ainsi plus de deux fréquences simultanées différentes.

12. Système de structure vibroacoustique (1) selon l'une quelconque des revendications précédentes, **caractérisé en ce que** la plaque (4) forme une partie structurelle du véhicule aérien.

13. Système de structure vibroacoustique (1) selon l'une quelconque des revendications précédentes, **caractérisé en ce que** la cellule intermédiaire (5) est constituée de parois présentant une géométrie angulaire ou courbe.
